Europäisches Patentamt

European Patent Office

Office européen des brevets

(11) Veröffentlichungsnummer: **0 259 845 B1**

# EUROPÄISCHE PATENTSCHRIFT

(45) Veröffentlichungstag der Patentschrift: **31.07.91**

(51) Int. Cl.5: **H02H 11/00**

(21) Anmeldenummer: **87113136.3**

(22) Anmeldetag: **08.09.87**

(54) **Verpolungs- und Wechselspannungsschutz für gleichstrombetriebene elektrische Verbraucher.**

(30) Priorität: **11.09.86 DE 3630990**

(43) Veröffentlichungstag der Anmeldung:
**16.03.88 Patentblatt 88/11**

(45) Bekanntmachung des Hinweises auf die
Patenterteilung:
**31.07.91 Patentblatt 91/31**

(84) Benannte Vertragsstaaten:
**AT CH DE ES FR GB IT LI NL SE**

(56) Entgegenhaltungen:
**DE-A- 2 242 050**
**DE-A- 2 743 622**
**DE-A- 2 743 636**

(73) Patentinhaber: **Siemens Aktiengesellschaft**
**Wittelsbacherplatz 2**
**W-8000 München 2(DE)**

(72) Erfinder: **Obergfell, Rainer, Dipl.-Ing.**
**Langbehnstrasse 11a**
**W-8000 München 21(DE)**

## Beschreibung

Die Erfindung bezieht sich auf eine Schaltungsanordnung gemäß dem Oberbegriff des Patentanspruches 1.

Bei elektrischen Verbrauchern, die mit Gleichspannung betrieben werden, besteht bei Falschpolung dieser Versorgungsspannung die Gefahr der Beschädigung oder sogar der Zerstörung des angeschlossenen Gerätes. Vielfach sollen solche gleichstromgespeisten Verbraucher auch gegen Anliegen einer Wechselspannung mit wesentlich höherem Effektivwert als die zulässige Gleichspannung wirksam vor einer Zerstörung geschützt werden.

Den einfachsten Schutz für einen solchen Verbraucher bildet eine Diode in Serie mit dem zu schützenden Gerät oder eine Brückenschaltung aus Dioden. Der Ausgangsstrom der Brückenschaltung hat dabei immer die gleiche Richtung, unabhängig davon, ob am Eingang der Brückenschaltung eine richtig bzw. falsch gepolte Gleichspannung oder eine Wechselspannung anliegt. Diese beiden Maßnahmen führen aber bei angeschlossenen Geräten höherer Leistung und bei niedrigen Verbraucherspannungen zu einer erheblichen Verlustleistung.

Aus der DE-OS 27 43 622 ist eine Schaltungsanordnung zum Schutz elektrischer Verbraucher gegen Falschpolung der Betriebsgleichspannung bekannt, bei der eine in Serie mit dem Verbraucher geschaltete Diode bei richtiger Polung der Gleichspannung durch den Kontakt eines in einem Nebenschlußkreis liegenden Relais überbrückbar ist. Dabei ist das Relais in Reihe hinter der Diode und zumindest einem Teil der Verbraucherspannung parallelgeschaltet.

In der DE-OS 27 43 636 ist eine Schaltungsanordnung zum Schutz solcher Verbraucher angegeben, wobei ein im Verbraucherstromkreis liegender Kontakt durch eine an die Netzklemmen anschaltbare Relaiswicklung einschaltbar ist. Hierbei wird als Relais ein bistabiles und polarisiertes Relais verwendet und mit einem Kondensator in Reihe derart an die Eingangsklemmen angeschaltet, daß der Kontakt nur bei richtiger Polung der Betriebsspannung geschlossen wird.

Alle diese bekannten Schaltungen schützen den Gleichstromverbraucher nur gegen Falschpolung der Batteriespannung bzw. gegen Wechselspannungen, die in der Größenordnung der zulässigen Gleichspannung liegen.

Aus der DE-A-2242050 ist weiter eine Verpolschutzeinrichtung mit den Merkmalen des Oberbegriffs des Anspruchs 1 bekannt geworden, bei welcher die Relaiswicklung über einen Transistor angesteuert wird, der über eine Schaltung aus Kondensatoren und Dioden durch ein negatives Potential an seiner Basis auch dann gesperrt wird, wenn die Welligkeit der gleichgerichteten und richtig gepolten Versorgungsspannung einen bestimmten Grenzwert überschreitet. Ein Schutz gegen Wechselspannungen, insbesondere hoher Amplituden, ist mit dieser Einrichtung nicht beabsichtigt.

Es ist deshalb Aufgabe der Erfindung, eine Schaltungsanordnung zum Schutz elektrischer Verbraucher sowohl gegen Falschpolung der Versorgungsspannung, als auch gegen Anliegen von Wechselspannungen hoher Amplitude anzugeben, die bei einfachem Aufbau mit wenigen, preisgünstigen Bauteilen nur eine geringe Verlustleistung aufweist.

Erfindungsgemäß wird diese Aufgabe durch die Merkmale des Anspruchs 1 gelöst. Durch Einfügen eines Kontaktes eines herkömmlichen Relais in den Eingangskreis des Gleichstromverbrauchers wird die angelegte Spannung zunächst vom Gerät ferngehalten. Eine Abfrageschaltung gestattet das Schließen dieses Kontaktes nur dann, wenn keine negativen Anteile der Eingangsspannung festgestellt werden. Stellt die Abfrageschaltung negative Anteile einer Wechselspannung oder eine negative, d.h. verpolte Gleichspannung fest, so wird ein Transistor, der die Relaiswicklung ansteuert, gesperrt und der Relaiskontakt bleibt offen. Somit ist ein Schutz des angeschlossenen Gerätes sowohl bei Falschpolung der Versorgungsspannung als auch bei Anliegen einer Wechselspannung gewährleistet. Selbst Wechselspannungen, deren Effektivwert weit höher liegt als der zulässige Gleichspannungswert, haben keinen Einfluß auf den angeschlossenen Gleichstromverbraucher.

Durch die erfindungsgemäß bevorzugte Anordnung eines Kondensators zur Zeitverzögerung ist sichergestellt, daß im Einschaltmoment zwischen einem positiven Anteil einer Wechselspannung und einer zulässigen, d.h. richtig gepolten Gleichspannung unterschieden werden kann. Dadurch werden Fehlauslösungen durch sofortiges Schalten des Relaiskontaktes vermieden. Außerdem kann die Zeitkonstante eines Zeitgliedes so gewählt werden, daß der Transistor mindestens während einer Periode der angelegten Wechselspannung gesperrt und damit der Relaiskontakt geöffnet bleibt.

Da bei ordnungsgemäßem Betrieb (richtige Polung der Gleichspannung) eine Z-Diode mit dem das Relais ansteuernden Transistor eine Konstantstromquelle bilden, ist die Verlustleistung minimal. Diese Verlustleistung des Transistors kann in einer Weiterbildung der Erfindung ebenfalls vermieden werden, wenn nach Anlauf der Schaltung das Relais mit Hilfe einer internen Spannung versorgt wird.

Da bei anliegenden hohen Wechselspannungen-große Verlustleistungen in den beiden mit der Basis des Transistors verbundenen Widerständen auftreten können, ist es vorteilhaft, diese Widerstände als Kaltleiter zu realisieren.

Die gesamte Schaltungsanordnung hat den Vorteil, daß sie mit wenigen, handelsüblichen Standardbauteilen aufgebaut und damit preisgünstig hergestellt werden kann.

Nachfolgend werden zwei Ausführungsbeispiele der Erfindung anhand der Zeichnung näher erläutert.

Es zeigen

Figur 1 eine Schaltungsanordnung zum Schutz gegen Falschpolung der Versorgungsspannung gemäß der Erfindung,

Figur 2 eine Abwandlung von Figur 1 mit einem von einer Hilfsspannung versorgten Relais.

In beiden Figuren sind gleiche Teile mit den gleichen Bezugzeichen versehen.

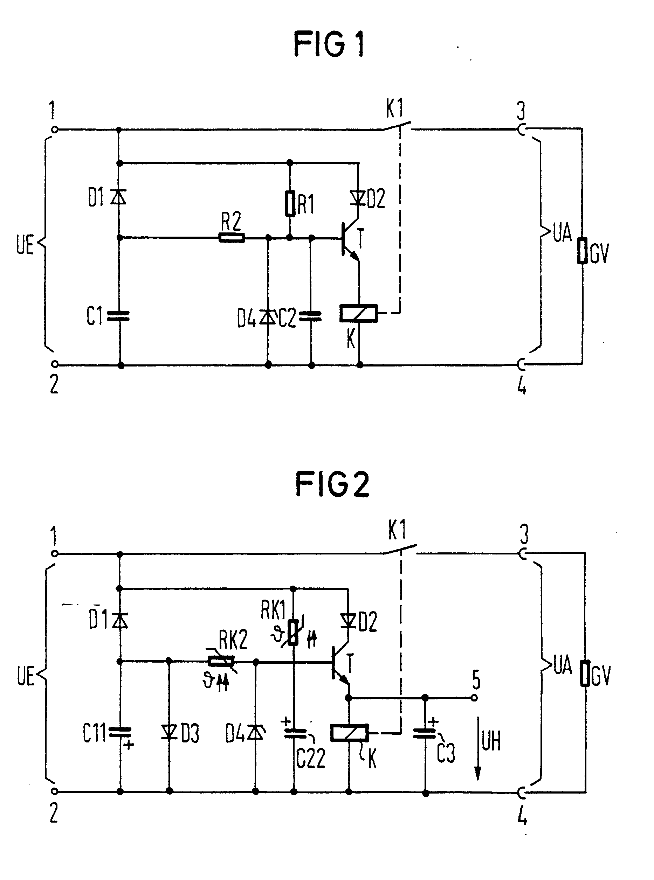

Die Figur 1 zeigt einen Gleichstromverbraucher GV, der über die Klemmen 3 und 4 an eine Ausgangsspannung UA der erfindungsgemäßen Schaltungsanordnung angeschaltet ist. Dabei ist angenommen, daß bei richtiger Polung der Versorgungsspannung Pluspol an Klemme 3 abgegriffen werden kann. Versorgungsspannung UE liegt an den Klemmen 1,2, wobei diese Spannung eine richtig gepolte Gleichspannung (Pluspol an Klemme 1) bzw. eine falsch gepolte Gleichspannung (Pluspol an Klemme 2) oder eine Wechselspannung sein kann. Im Verbraucherstromkreis liegt zwischen den Klemmen 1 und 3 ein Kontakt K1, der durch ein Relais K betätigbar ist. Zwischen den Klemmen 1 und 2 ist eine Serienschaltung einer Diode D1 und eines Kondensators C1 geschaltet, wobei die Kathode der Diode D1 mit der Klemme 1 verbunden ist. Die Anode der Diode D1 ist über einen Widerstand R2 mit der Basis eines Transistors T verbunden. Weiter ist die Klemme 1 über eine in Flußrichtung gepolte Diode D2 und der Kollektor-Emitter Strecke des Transistors T an ein Wicklungsende des Relais K verbunden. Das andere Wicklungsende der Relaiswicklung K liegt an der unmittelbaren Verbindungsleitung der Klemmen 2 und 4. Der Basisanschluß des Transistors T ist einerseits über einen Widerstand R1 mit der Klemme 1 und andererseits über eine Parallelschaltung einer in Sperrichtung betriebenen Z-Diode D4 und eines Kondensators C2 mit der Verbindungsleitung der Klemmen 2 und 4 verbunden.

Wird an den Eingangsklemmen 1 und 2 eine falsch gepolte Gleichspannung (Pluspol an Klemme 2) oder eine Wechselspannung angelegt, so muß die Schaltung sicherstellen, daß der Kontakt K1 geöffnet ist. Hierzu werden über die Diode D1 und den Kondensator C1 negative Anteile der Wechselspannung oder einer negativen (verpolten) Gleichspannung festgestellt und der Transistor T erhält eine durch die Z-Diode D4 begrenzte negative Spannung von beispielsweise -0,7 V. Durch diese negative Basisvorspannung ist der Transistor gesperrt, durch die Wicklung des Relais K kann kein Strom fließen und der Kontakt K1 bleibt offen.

Wird eine richtige gepolte Gleichspannung (Pluspol an Klemme 1) angelegt, so entlädt sich der Kondensator C1 über den Widerstand R2 und der Transistor T wird über den Widerstand R1 leitend geschaltet. Über die Diode D2 und der Kollektor-Emitterstrecke des Transistors T fließt ein Strom durch die Erregerwicklung des Relais K und der als Schließer ausgebildete Kontakt K1 verbindet den Gleichstromverbraucher GV mit der Versorgungsspannung UE. Die Diode D2 im Kollektoranschluß des Transistors T verhindert das inverse Leiten des Transistors T während des Sperrbetriebs. Der Kondensator C2 sorgt für eine gewisse Zeitverzögerung, da im Einschaltmoment durch die Abfrageschaltung (bestehend aus C1 und D1) nicht zwischen dem positiven Anteil einer möglicherweise anliegenden Wechselspannung und einer zulässigen Gleichspannung (Pluspol an Klemme 1) unterschieden werden kann. Die Dauer dieser Ansprechverzögerung wird durch die Zeitkonstante eines Zeitgliedes, bestehend aus Widerstand R1 und Kondensator C2, bestimmt und wird so gewählt, daß mindestens während einer Periode der angelegten Wechselspannung der Transistor T noch gesperrt bleibt und sich der Kondensator C2 auf eine ausreichend hohe negative Spannung entladen kann.

Durch diese Schaltungsmaßnahme werden Fehlauslösungen des Kontaktes K1 ausgeschlossen.

Die Werte für die Widerstände R1 und R2 sind gleich groß zu wählen. Zweckmäßigerweise sind hierfür Kaltleiter (PTC-Widerstände) zu verwenden, da speziell bei Wechselspannungen hoher Amplitude ($U_{eff} > 10 \cdot U_=$) hohe Verlustleistungen an beiden Widerständen auftreten können.

In Figur 2, die prinzipiell dieselbe Funktionsweise wie die Schaltung in Figur 1 aufweist, sind diese Widerstände R1 und R2 durch Kaltleiter RK1 und RK2 ersetzt.

Ein weiterer Unterschied der in Fig. 2 gezeigten Schaltung zu der Schaltungsanordnung gemäß Figur 1 ergibt sich durch Einschalten einer weiteren Diode D3 parallel zum Kondensator C1. Wird für diesen Kondensator C1 nämlich ein Elektrolytkondensator C11 (Pluspol an Klemme 2), verwendet, so verhindert die Diode D3 ein Umpolen des Elektrolytkondensators C11.

Außerdem ist auch für den Kondensator C2, der für die nötige Zeitverzögerung sorgt, ein Elektrolytkondensator C22 eingesetzt (Pluspol an der Basis des Transistors T).

Bei richtig gepolter Eingangsgleichspannung bilden die Z-Diode D4 und der Transistor T eine Konstantspannungsquelle zur Versorgung der Wicklung des Relais K. Die hierbei auftretende Verlustleistung im Transistor T wird dadurch vermieden, daß während des ordnungsgemäßen Betriebes des Gleichstromverbrauchers das Relais K von einer Hilfsspannung UH versorgt wird. Diese Hilfsspannung UH wird an den Klemmen 5 und 4 angelegt und muß etwas größer sein als die von der Konstantspannungsquelle gelieferte Spannung, so daß der Transistor T sperrt. Ist diese Hilfsspannung UH eine nicht ausreichend geglättete gleichgerichtete Wechselspannung, so ist ein weiterer Kondensator C3 (vorzugsweise ein Elektrolytkondensator mit Pluspol an Klemme 5) vorzusehen.

Die übrige Anordnung der Bauelemente gemäß Figur 2 entspricht der Anordnung in Figur 1.

## Patentansprüche

1.  Schaltungsanordnung zum Schutz gleichstrombetriebener Verbraucher (GV) gegen Falschpolung der Versorgungsspannung (UE), wobei ein im Eingangskreis des Verbrauchers (GV) liegender Kontakt (K1) durch eine Relaiswicklung (K) derart betätigt wird, daß bei Falschpolung der Versorgungsspannung (UE) der Verbraucher (GV) von der Versorgungsspannung (UE) getrennt ist,
    **dadurch gekennzeichnet,**
    daß die Schaltungsanordnung zum zusätzlichen Schutz gegen Wechselspannungen, insbesondere Wechselspannungen hoher Amplitude, eine Abfragestufe (D1,C1) enthält, die in einem vorgebbaren Zeitabschnitt die Versorgungsspannung (UE) durch den Relaiskontakt (K1) von dem Verbraucher (GV) fernhält sowie in diesem Zeitabschnitt eine Vorzeichenänderung der Versorgungsspannung (UE) erfaßt und nur dann den Verbraucher (GV) mit der Versorgungsspannung (UE) beaufschlagt, wenn bei richtig gepolter Versorgungsspannung (UE) keine Vorzeichenänderung innerhalb des vorgebbaren Zeitabschnitts auftritt.

2.  Schaltungsanordnung nach Anspruch 1,
    **dadurch gekennzeichnet,**
    daß der vorgebbare Zeitabschnitt so gewählt ist, daß mindestens während einer Periode der angelegten Wechselspannung der Kontakt (K1) geöffnet bleibt.

3.  Schltungsanordnung nach Anspruch 1,
    **dadurch gekennzeichnet,**
    daß die Relaiswicklung (K) über einen Transistor (T) angesteuert wird.

4.  Schaltungsanordnung nach Anspruch 3,
    **dadurch gekennzeichnet,**
    daß die Abfragestufe aus einer Diode (D1) und einem Kondensator (C1) besteht, die in Reihe an die Versorgungsspannung (UE) angeschaltet sind und deren Verbindungspunkt über einen Widerstand (R2) mit der Basis des Transistors (T) verbunden ist.

5.  Schaltungsanordnung nach Anspruch 2,
    **dadurch gekennzeichnet,**
    daß der vorgegebene Zeitabschnitt durch die Zeitkonstante eines Zeitglieds, bestehend aus einem Widerstand (R1) und einem Kondensator (C2), bestimmt ist.

6.  Schaltungsanordnung nach Anspruch 4 oder 5,
    **dadurch gekennzeichnet,**
    daß die Widerstände (R1,R2) durch Kaltleiter (RK1, RK2) ersetzt sind.

7.  Schaltungsanordnung nach Anspruch 1,
    **dadurch gekennzeichnet,**
    daß bei geschlossenem Kontakt (K1) die Relaiswicklung (K) aus einer Hilfsspannungsquelle (UH) versorgt wird.

## Claims

1.  Circuit arrangement for protecting direct-current-operated loads (GV) against inverse polarity of the supply voltage (UE), in which arrangement a contact (K1) located in the input circuit of the load (GV) is operated by a relay winding (K) in such a manner that the load (GV) is disconnected from the supply voltage (UE) in the case of an inverse polarity of the supply voltage (UE), characterised in that the circuit arrangement, for additional protection against alternating voltages, particularly alternating voltages of a high amplitude, contains an interrogating stage (D1, C1) which holds the supply voltage (UE) remote from the load (GV) by means of relay contact (K1) for a predeterminable period of time and, during this time period, detects a sign change in the supply voltage (UE) and only applies the supply voltage (UE) to the load (GV) if, with correct polarity of the supply voltage (UE), no sign change occurs within the predeterminable time period.

2.  Circuit arrangement according to Claim 1, characterised in that the predeterminable time period is selected in such a manner that the contact (K1) remains open at least during one period of the applied alternating voltage.

3.  Circuit arrangement according to Claim 1, characterised in that the relay winding (K) is driven via a transistor (T).

4. Circuit arrangement according to Claim 3, characterised in that the interrogating stage consists of a diode (D1) and a capacitor (C1) which are connected in series to the supply voltage (UE) and the junction of which is connected via a resistor (R2) to the base of the transistor (T).

5. Circuit arrangement according to Claim 2, characterised in that the predeterminable time period is determined by the time constant of a timing section consisting of a resistor (R1) and a capacitor (C2).

6. Circuit arrangement according to Claim 4 or 5, characterised in that the resistors (R1, R2) are replaced by FTC thermistors (RK1, RK2).

7. Circuit arrangement according to Claim 1, characterised in that the relay winding (K) is supplied from an auxiliary voltage source (UH) when the contact (K1) is closed.

## Revendications

1. Montage pour protéger des appareils d'utilisation (GV) alimentés en courant continu, contre une polarité incorrecte de la tension d'alimentation (UE), et dans lequel un contact (K1) situé dans le circuit d'entrée de l'appareil d'utilisation (GV) est actionné par un enroulement (K) d'un relais de sorte que, dans le cas d'une polarité incorrecte de la tension d'alimentation (UE), l'appareil d'utilisation (GV) est déconnecté de la tension d'alimentation (UE),
caractérisé par le fait que le montage contient, pour réaliser une production supplémentaire vis-à-vis de tensions alternatives, notamment de tensions alternatives de grande amplitude, un étage d'interrogation (D1,C1), qui, pendant un intervalle de temps pouvant être prédéterminé, déconnecte la tension d'alimentation (U1), de l'appareil d'utilisation (GV), au moyen du contact (K1) du relais et détecte, pendant cet intervalle de temps, une variation du signe de la tension d'alimentation (UE) et charge l'appareil d'utilisaton (GV) avec la tension d'alimentation (UE) uniquement lorsque, la tension d'alimentation (UE) possédant une polarité correcte, il n'apparaît aucune variation du signe pendant l'intervalle de temps pouvant être prédéterminé.

2. Montage suivant la revendication 1, caractérisé par le fait que l'intervalle de temps pouvant être prédéterminé est choisi de manière que le contact (K1) reste ouvert au moins pendant une période de la tension alternative appliquée.

3. Montage suivant la revendication 1, caractérisé par le fait que l'enroulement (K) du relais est commandé au moyen d'un transistor (T).

4. Montage suivant la revendication 3, caractérisé par le fait que l'étage d'interrogation est constitué par une diode (D1) et un condensateur (C1), qui sont raccordés en série a la tension d'alimentation (UE) et dont le point de jonction est relié, par l'intermédiaire d'une résistance (R2), à la base du transistor (T).

5. Montage suivant la revendication 2, caractérisé par le fait que l'intervalle de temps prédéterminé est déterminé par la constante de temps d'un circuit de temporisation constitué par une résistance (R1) et un condensateur (C2).

6. Montage suivant la revendication 4 ou 5, caractérisé par le fait que les résistances (R1,R2) sont remplacées par des conducteurs froids (RK1,RK2).

7. Montage suivant la revendication 1, caractérisé par le fait que, lorsque le contact (K1) est fermé, l'enroulement (K) du relais est alimenté par une source de tension auxiliaire (UH).

# FIG 1

# FIG 2